# EUROPÄISCHE PATENTSCHRIFT

(11) **EP 3 586 090 B1**
(45) Veröffentlichungstag und Bekanntmachung des Hinweises auf die Patenterteilung: **02.02.2022**
(21) Anmeldenummer: 18717240.8
(22) Anmeldetag: 20.03.2018
(51) Int. Cl.: G01D 18/00, H04N 17/00, G01S 7/295, G01S 7/40, G01S 7/497, G01S 13/86, G01S 13/87, G01S 13/931, G01S 17/931, G01S 7/41

(54) **VERFAHREN ZUM KALIBRIEREN EINES SENSORSYSTEMS**
METHOD FOR CALIBRATING A SENSOR SYSTEM
PROCÉDÉ D'ÉTALONNAGE D'UN SYSTÈME DE CAPTEUR

(30) Priorität: 04.04.2017 DE 102017205727
(43) Veröffentlichungstag der Anmeldung: 01.01.2020
(73) Patentinhaber: Siemens Mobility GmbH, 81739 München (DE)
(72) Erfinder: FIEGERT, Michael, 81739 München (DE); FEITEN, Wendelin, 85579 Neubiberg (DE)
(86) Internationale Anmeldenummer: PCT/EP2018/057021
(87) Internationale Veröffentlichungsnummer: WO 2018/184829

(56) Entgegenhaltungen:
- MOGHADAM PEYMAN ET AL: "Line-based extrinsic calibration of range and image sensors", 2013 IEEE INTERNATIONAL CONFERENCE ON ROBOTICS AND AUTOMATION (ICRA); 6-10 MAY 2013; KARLSRUHE, GERMANY, IEEE, US, 6. Mai 2013 (2013-05-06), Seiten 3685-3691, XP032506614, ISSN: 1050-4729, DOI: 10.1109/ICRA.2013.6631095 ISBN: 978-1-4673-5641-1 [gefunden am 2013-10-13]
- GAURAV PANDEY ET AL: "Automatic Extrinsic Calibration of Vision and Lidar by Maximizing Mutual Information : Automatic Extrinsic Calibration of Vision and Lidar", JOURNAL OF FIELD ROBOTICS, Bd. 32, Nr. 5, 15. September 2014 (2014-09-15), Seiten 696-722, XP055491956, US ISSN: 1556-4959, DOI: 10.1002/rob.21542
- KENDALL ALEX ET AL: "PoseNet: A Convolutional Network for Real-Time 6-DOF Camera Relocalization", 2015 IEEE INTERNATIONAL CONFERENCE ON COMPUTER VISION (ICCV), IEEE, 7. Dezember 2015 (2015-12-07), Seiten 2938-2946, XP032866641, DOI: 10.1109/ICCV.2015.336 [gefunden am 2016-02-17]
- NICK SCHNEIDER ET AL: "RegNet: Multimodal Sensor Registration Using Deep Neural Networks", ARXIV.ORG, CORNELL UNIVERSITY LIBRARY, 201 OLIN LIBRARY CORNELL UNIVERSITY ITHACA, NY 14853, 11. Juli 2017 (2017-07-11), XP080775816, DOI: 10.1109/IVS.2017.7995968

## Beschreibung

Die vorliegende Erfindung betrifft ein Verfahren zum Kalibrieren eines Sensorsystems und ein sich selbst kalibrierendes Sensorsystem.

Ein technisches System, das mehrere Sensoren auf Basis verschiedener Messprinzipien umfasst, setzt für die korrekte Funktionalität eine Kalibrierung dieser Sensoren voraus. Sensoren von Sensorsystemen, wie beispielsweise in einem Fahrzeug, werden zueinander kalibriert, um eine möglichst hohe Übereinstimmung der Daten zu erhalten, die von den Sensoren erfasst werden. Beispielsweise werden die Anbauorte und Blickrichtungen der Sensoren oder andere Größen wie Latenzzeiten zwischen den Sensoren und dem Gesamtsystem oder Abbildungseigenschaften der Sensoren kalibriert.

Bei dieser Kalibrierung kann sowohl eine intrinsische Kalibrierung der einzelnen Sensoren als auch eine extrinsische Kalibrierung der Sensoren zueinander erfolgen.

Eine intrinsische Kalibrierung bedeutet, dass interne Parameter des Sensors bestimmt werden. Eine extrinsische Kalibrierung befasst sich hingegen mit der Bestimmung von Parametern zwischen unterschiedlichen Sensoren oder zwischen einem Sensor und einem weiteren festgelegten Koordinatensystem. Die extrinsische Kalibrierung wird durchgeführt, da die gegenseitige Anordnung der Sensoren oftmals nicht exakt bekannt ist, beispielsweise aufgrund von Ungenauigkeiten bei der Montage oder aufgrund von unbekannten internen Sensoreigenschaften.

Gleichzeitig ist eine manuelle Vermessung der Sensoren unpräzise, fehleranfällig oder nicht durchführbar. Die extrinsische Kalibrierung geht davon aus, dass bekannte Invarianten bestehen, sodass der räumliche Zusammenhang zwischen verschiedenen Sensoren bestimmt werden kann.

Dazu werden eindeutige Kalibrierungsmerkmale verwendet, die extra zum diesem Zweck auf fest definierten Kalibrierkörper angebracht sind. Die Verwendung von Kalibrierkörpern ermöglicht jedoch nicht, dass die Kalibrierung während eines Normalbetriebes erfolgt.

Die Druckschrift DE 10 2014 014 295 A1 betrifft ein Verfahren zur Überwachung mehrerer, Sensordaten aus der Umgebung eines Kraftfahrzeugs aufnehmender, an einer durch extrinsische Kalibrierungsparameter beschriebenen Verbauposition im Kraftfahrzeug verbauter Umgebungssensoren bezüglich der extrinsischen Kalibrierungsparameter sowie ein Kraftfahrzeug. Bei einem bewegten Kraftfahrzeug gleichzeitig aufgenommene Sensordaten ausgewertet werden.

Die Druckschrift US 2014 240 690 A1 betrifft ein Bestimmen extrinsischer Kalibrierungsparameter für zumindest einen Sensor, der an einem transportierbaren Gerät montiert ist.

Die Druckschrift US 2011/228101 A1 betrifft ein Verfahren zum Bestimmen von Kalibrierungsparametern einer Kamera. Bei diesem Verfahren wird eine einzelne Kamera auf Basis zweier zu unterschiedlichen Zeiten aufgenommenen Bilder mittels einer Transformationsmatrix kalibriert.

Aus der Druckschrift "Peyman et al.: "Line-based Extrinsic Calibration of Range and Image Sensors"; IEEE International Conference on Robotics and Automation (IRCA); Karlsruhe, Germany May 6-10, 2013; Seiten 3685 bis 3691" ist es bekannt, Bild- und Bereichssensoren linienbasiert zu kalibrieren, indem dominante Kantenmerkmale (Edge Features) aus einem zweidimensionalen Bild des Bildsensors extrahiert und zusätzlich zwei Arten von 3D-Linien aus dreidimensionalen Punktewolkendaten des Bereichssensors extrahiert werden. Dabei werden eine "6 Degrees of Freedom (6DoF)"-Posentransformation des Bildes in Bezug zu den Punktewolkendaten auf Basis der extrahierten Linien auf Basis eines Optimierungsansatzes gesucht und die Posentransformation zur Kalibrierung von 3D-Bereichssensoren und 2D-Bildsensoren verwendet.

Es ist die technische Aufgabe der vorliegenden Erfindung, eine Kalibrierung eines Sensorsystems während eines Betriebs, ohne einen speziellen Kalibrierkörper durchzuführen.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die Aufgabe durch ein Verfahren zum Kalibrieren eines Sensorsystems gelöst, mit folgenden Schritten:
- Erfassen eines ersten Datenstroms mittels eines ersten Sensors;
- Extrahieren eines Kalibrierungsmerkmals aus dem ersten Datenstrom;
- Erfassen eines zweiten Datenstroms mittels eines zweiten Sensors;
- Identifizieren des extrahierten Kalibrierungsmerkmals in dem zweiten Datenstrom;
- Durchführen der Extraktion des Kalibrierungsmerkmals und der Identifikation des extrahierten Kalibrierungsmerkmals auf Basis eines neuronalen Netzes; und
- Kalibrieren des ersten Sensors in Bezug auf den zweiten Sensor auf Basis des extrahierten Kalibrierungsmerkmals und des identifizierten Kalibrierungsmerkmals.

Da das Kalibrierungsmerkmal automatisch mittels einer Analyse aus dem ersten Datenstrom extrahiert wird, wird der technische Vorteil erreicht, dass keine speziellen Kalibrierkörper und Kalibriervorgänge erforderlich sind, die den Normalbetrieb beeinträchtigen würden.

Darüber hinaus gehend wird beispielsweise der technische Vorteil erreicht, dass geeignete Kalibrierungsmerkmale schnell erlernt werden können.

In einer technisch vorteilhaften Ausführungsform des Verfahrens ist der erste und/oder zweite Sensor ein Bildsensor zum optischen Erfassen der Umgebung des Sensorsystems. Dadurch wird beispielsweise der technische Vorteil erreicht, dass die Umgebung des Sensorsystems schnell und einfach erfasst werden kann.

In einer weiteren technisch vorteilhaften Ausführungsform des Verfahrens ist der erste und/oder zweite Sensor ein Laserscanner, der einen Laserstrahl ausstrahlt, der die Umgebung zeilen- oder rasterartig überstreicht. Dadurch wird beispielsweise ebenfalls der technische Vorteil erreicht, dass die Umgebung des Sensorsystems schnell und einfach erfasst werden kann.

In einer weiteren technisch vorteilhaften Ausführungsform des Verfahrens ist der erste und/oder zweite Sensor ein Radarsensor, der ein Radarsignal aussendet, das von der Umgebung des Sensorsystems an den Sensor zurückreflektiert wird. Dadurch wird beispielsweise der technische Vorteil erreicht, dass die Umgebung des Sensorsystems in einem weiteren Wellenlängenbereich erfasst werden kann.

In einer weiteren technisch vorteilhaften Ausführungsform des Verfahrens ist wird das Extrahieren oder Identifizieren eines Kalibrierungsmerkmals auf Basis eines maschinellen Lernens durchgeführt, bei dem Muster in den Datenströmen als Kalibrierungsmerkmale erkannt werden. Dadurch wird beispielsweise der technische Vorteil erreicht, dass sich geeignete Kalibrierungsmerkmale schnell und einfach bestimmen lassen.

In einer weiteren technisch vorteilhaften Ausführungsform des Verfahrens wird das Extrahieren oder Identifizieren eines Kalibrierungsmerkmals auf Basis einer Anzahl von beschreibenden Elementen durchgeführt wird. Dadurch wird beispielsweise der technische Vorteil erreicht, dass das Erkennen eines Kalibrierungsmerkmals schnell und effizient durchgeführt werden kann.

Gemäß einem zweiten Aspekt wird die Aufgabe durch ein Sensorsystem gelöst, mit
- einem ersten Sensor zum Erfassen eines ersten Datenstroms;
- einem zweiten Sensor zum Erfassen eines zweiten Datenstroms;
- einem Extraktionsmodul zum Extrahieren eines Kalibrierungsmerkmals aus dem ersten Datenstrom auf Basis eines neuronalen Netzes;
   einem Identifikationsmodul zum Identifizieren des extrahierten Kalibrierungsmerkmals in dem zweiten Datenstrom auf Basis des neuronalen Netzes; und
- einem Kalibrierungsmodul zum Kalibrieren des ersten Sensors in Bezug auf den zweiten Sensor auf Basis des extrahierten Kalibrierungsmerkmals und des identifizierten Kalibrierungsmerkmals.

Dadurch werden die gleichen technischen Vorteile wie durch das Verfahren nach dem ersten Aspekt erreicht.

Gemäß einem dritten Aspekt wird die Aufgabe durch ein Computerprogramm mit Programmabschnitten zum Durchführen der Verfahrensschritte nach dem ersten Aspekt gelöst, wenn das Computerprogramm auf einem Computer ausgeführt wird.

Gemäß einem vierten Aspekt wird die Aufgabe durch einen Datenspeicher mit einem Computerprogramm nach dem dritten Aspekt gelöst.

Ausführungsbeispiele der Erfindung sind in den Zeichnungen dargestellt und werden im Folgenden näher beschrieben.

Es zeigen:
- Fig. 1: eine schematische Darstellung eines Sensorsystems;
- Fig. 2: ein probabilistisches graphisches Model; und
- Fig. 3: ein Blockdiagramm eines Verfahrens.

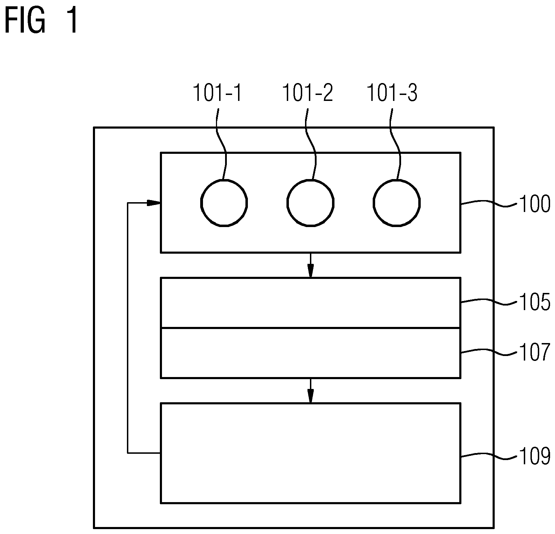

Fig. 1 zeigt eine schematische Darstellung eines Sensorsystems 100. Das Sensorsystem 100 umfasst mehrere Sensoren 101-1, ..., 101-3 zur Erfassung der Umgebung, die jeweils einen Datenstrom erzeugen.

Der Sensor 101-1 ist beispielsweise ein Bildsensor zum optischen Erfassen der Umgebung des Sensorsystems 100 und erzeugt einen Bilddatenstrom. Der Bildsensor kann ein halbleiterbasierter Bildsensor sein, der Lichtbilder in unterschiedlichen Spektralbereichen aufnehmen kann. Zu diesem Zweck umfasst der Bildsensor einen CCD-Feld (CCD - Charge Coupled Electronic Device) als lichtempfindliches elektronisches Bauelement, das auf dem inneren Photoeffekt beruht. Der Bildsensor erfasst beispielsweise ein Umgebungsmerkmal 113 optisch und erzeugt einen Datenstrom an Bilddaten.

Der Sensor 101-2 ist beispielsweise ein Radarsensor, der einen Datenstrom an Radarsensordaten erzeugt. Der Radarsensor sendet ein Radarsignal aus, das von der Umgebung des Sensorsystems 100 an den Sensor 101-2 zurückreflektiert wird und vom dem Sensor 101-2 erfasst wird. Je nachdem aus welchem Material ein Objekt besteht, wird das Radarsignal besser oder schlechter als optisches Licht reflektiert.

Der Sensor 101-3 ist beispielsweise ein Laserscanner, der einen Laserstrahl ausstrahlt, der die Umgebung zeilen- oder rasterartig überstreicht und ebenfalls einen Datenstrom erzeugt. Dadurch kann die Umgebung vermessen werden oder ein Bild erzeugt werden. Der Laserscanner kann neben einer Objektgeometrie zusätzlich die Intensität des reflektierten Signals erfassen, so dass Grauwerte erfasst werden können.

Das Sensorsystem 100 ist beispielsweise in einem Kraftfahrzeug, einem Zug, einem Schiff oder einem Flugzeug angeordnet. Im Allgemeinen kann das Sensorsystem aber auch in anderen technischen Vorrichtungen vorgesehen sein. Je nach Einsatzgebiet umfasst das Sensorsystem 100 unterschiedliche Sensoren, die für den entsprechenden Einsatzzweck des Sensorsystems ausgelegt sind.

Um von den Sensoren 101-1, ..., 101-3 übereinstimmende Ergebnisse zu erhalten, werden diese mittels eines Kalibrierungsverfahrens aufeinander abgestimmt. Eine intrinsische Kalibrierung bedeutet, dass interne Parameter des Sensors 101-1, ..., 101-3 bestimmt werden. Eine extrinsische Kalibrierung befasst sich hingegen mit der Bestimmung von Parametern zwischen unterschiedlichen Sensoren 101-1, ..., 101-3 oder zwischen einem Sensor 101-1, ..., 101-3 und einem weiteren festgelegten Koordinatensystem. Die extrinsische Kalibrierung wird durchgeführt, da die gegenseitige Anordnung der Sensoren 101-1, ..., 101-3 oftmals nicht exakt bekannt ist, beispielsweise aufgrund von Ungenauigkeiten bei der Montage oder aufgrund von unbekannten internen Sensoreigenschaften.

Zur Kalibrierung der Sensoren 101-1, ..., 101-3 können physische Kalibrierkörper mit speziellen Kalibrierungsmerkmalen verwendet werden, die gleichzeitig von den Sensoren 101-1, ..., 101-3 erfasst werden. Durch den Kalibrierkörper können die Sensoren 101-1, ..., 101-3 aufeinander abgestimmt werden. Allerdings kann diese Kalibrierung nur mit einem geeigneten Kalibrierkörper vorgenommen werden, d.h. bei einer Wartung oder Inbetriebnahme des Sensorsystems. Eine nachträgliche Kalibrierung des Sensorsystems 100 ist daher nicht ohne weiteres möglich.

Daher umfasst das Sensorsystem 100 ein Extraktionsmodul 105 zum Extrahieren eines geeigneten Kalibrierungsmerkmals 103 aus dem Datenstrom eines beliebigen Sensors 101-1, ..., 101-3. Das Extraktionsmodul 105 ist beispielsweise durch einen Auto-Encoder oder ein neuronales Netz gebildet. Durch das Extraktionsmodul 105 wird automatisch ein geeignetes Kalibrierungsmerkmal 103 aus dem Datenstrom extrahiert, beispielsweise mittels einer Bildanalyse mit der sich wiederholende oder häufig auftretende Bildelemente als Kalibrierungsmerkmale 103 festgestellt werden können.

Im Falle eines Kraftfahrzeugs, dass sich auf einer Straße bewegt, ermittelt das Extraktionsmodul 105 beispielsweise automatisch ein einzelnes Bildmerkmal als Kalibrierungsmerkmal, das zur Kalibrierung der übrigen Sensoren herangezogen werden kann. Das Bildmerkmal ist beispielsweise ein Ortsschild, ein Autobahnschild, eine Pylone oder Leitpfosten oder ein Verkehrsschild. Diese Kalibrierungsmerkmale können sicher erfasst werden und bleiben über die Zeit möglichst konstant. Das Kalibrierungsmerkmal ist nicht vorgegeben, sondern wird automatisch durch das Extraktionsmodul 105 durch eine Analyse des Datenstroms erkannt.

Weiter umfasst das Sensorsystem 100 ein Identifikationsmodul 107 zum Identifizieren desjenigen Kalibrierungsmerkmals 103, das aus dem einen Datenstrom extrahiert worden ist, in dem Datenstrom eines der anderen Sensoren. Ist beispielsweise aus dem Datenstrom des Bildsensors ein bestimmtes Verkehrsschild als Kalibrierungsmerkmal extrahiert worden, sucht das Identifikationsmodul nach genau diesem Verkehrsschild in dem Datenstrom eines anderen Sensors. Sobald das Verkehrsschild in dem Datenstrom des anderen Sensors identifiziert worden ist, lassen sich die beiden Sensoren miteinander vergleichen. Dabei kann festgestellt werden, ob das Kalibrierungsmerkmal in beiden Sensoren an der gleichen Stelle oder zur gleichen Zeit erfasst wird. Das Identifikationsmodul 107 ist beispielsweise ebenfalls durch einen Auto-Encoder oder ein neuronales Netz gebildet.

Ein Kalibrierungsmodul 109 ermittelt die Kalibrierungsparameter zum Kalibrieren des ersten Sensors 101-1 in Bezug auf den zweiten Sensor 101-2 auf Basis des extrahierten Kalibrierungsmerkmals und des identifizierten Kalibrierungsmerkmals. Wie beispielsweise Parameter für eine Koordinatentransformation oder einen Zeitversatz.

Das Extraktionsmodul 105, das Identifikationsmodul 107 und das Kalibrierungsmodul 109 können durch entsprechende elektronische Schaltungen gebildet sein oder durch Softwaremodule, die in einen Speicher des Sensorsystems 100 geladen werden und von einem Prozessor des Sensorsystems 100 ausgeführt werden.

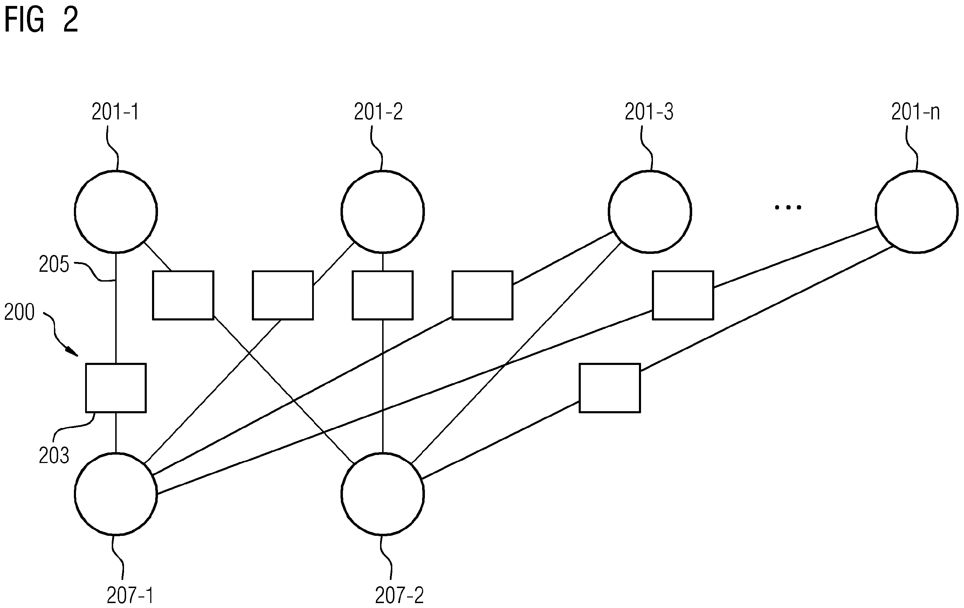

Fig. 2 zeigt ein probabilistisches graphisches Model als Graph 200. Die Knoten 201-1, ..., 201-n werden hierbei als Kreise dargestellt. Die Messungen 203 werden in Form einer kleinen Markierung auf der Kante 205 (=Zuordnung) repräsentiert. Eine denkbare Methode dazu baut auf ein graphenbasiertes "Simultaneous Localization and Mapping (SLAM)" auf, bei dem für jede unbekannte Größe oder Gruppe von zusammengehörigen Größen ein Knoten 201-1, ..., 201-n angelegt wird, und für jede zugeordnete Messung eine Kante 205. Knoten 201-1, ..., 201-n existieren insbesondere für die verschiedene Sensoren 101-1, ..., 101-3. Die Knoten 201-1, ..., 201-n enthalten die jeweiligen zu kalibrierenden Parameter. Außerdem gibt es Knoten 207-1 und 207-2 für die extrahierten Merkmale, d.h. den zu Grunde liegenden Objekten der Umwelt. Jede Messung, die durch das Identifikationsmodul 107 einem Umweltmerkmal eindeutig zugeordnet werden konnte, wird in Form einer Kante 205 zwischen dem Sensor und dem Merkmal eingetragen. Damit entsteht ein System von probabilistischen Bedingungen das es ermöglicht die Parameter zu berechnen. Während beim SLAM in erster Linie die Position der Merkmale in der Umwelt, d.h. der Karte), bestimmt wird, werden in diesem Fall die Sensorparameter die Kalibrierung bestimmt.

Die Merkmale sind nicht explizit dargestellt, liegen aber jeder Kante zugrunde. Die Knoten 201-1, ..., 201-n sind für ein bekanntes Kalibierobjekt zu verschiedenen Zeitpunkten dargestellt. Allerdings können ebenfalls mehrere verschiedene Kalibrierobjekte in der Umwelt vorhanden sein, typischerweise ortsfeste Kalibrierobjekte. Allerdings können ebenfalls unbekannte bewegte Umweltobjekte als Kalibrierobjekte möglich.

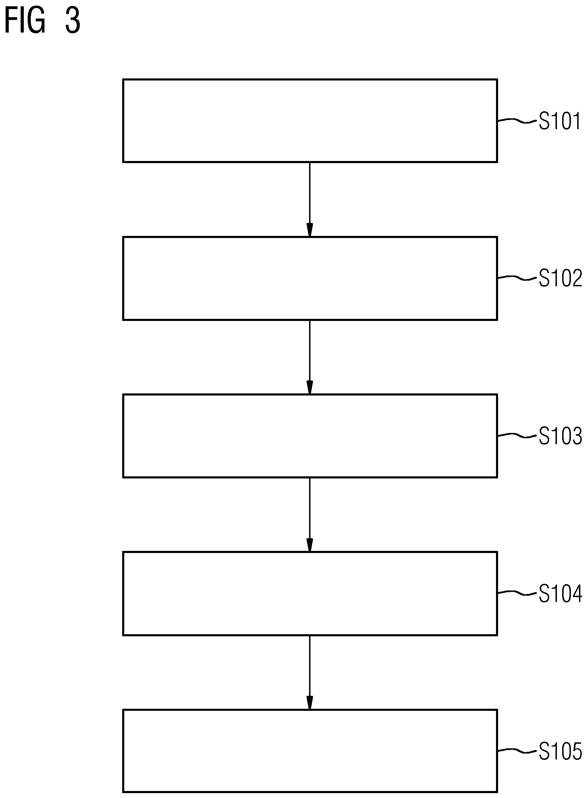

Fig. 3 zeigt ein Blockdiagramm eines Verfahrens zum Kalibrieren des Sensorsystems 100. In einem ersten Schritt S101 wird ein erster Datenstrom mittels eines ersten Sensors 101-1 erfasst. In Schritt S102 wird eine Kalibrierungsmerkmal 103 aus dem ersten Datenstrom extrahiert. In Schritt S103 wird mittels eines zweiten Sensors 101-2 ein zweiter Datenstrom erfasst, in dem das gleiche Kalibrierungsmerkmal 103 vorkommt. In Schritt S104 wird das Kalibrierungsmerkmal 103 in dem zweiten Datenstrom identifiziert. Die Kalibrierungsmerkmale 103 sind durch Muster in den Datenströmen gegeben.

In einer Variante werden in einem Schritt aus einem gemischten Datenstrom zugeordnete Merkmale extrahiert. Damit wird der Aufwand beim Extrahieren reduziert, das dann nicht zuordenbar ist. Die zwei Schritte sind durch ein Mischen und eine Extraktion von Zuordnungen zusammen mit den Merkmalen gegeben.

Dadurch wird es in Schritt S105 möglich, den ersten Sensor 101-1 in Bezug auf den zweiten Sensor 101-2 auf Basis des extrahierten Kalibrierungsmerkmals und des identifizierten Kalibrierungsmerkmals zu kalibrieren. Dadurch ist das Kalibrierungsmerkmal den beiden Sensoren 101-1 und 101-2 zeitlich zuordenbar. In gleicher Weise lassen sich weitere Sensoren 101-3 des Sensorsystems 100 kalibrieren.

Dadurch können alltägliche Objekte zur Kalibrierung verwendet werden, die während des normalen Betriebes durch die Sensoren 101-1, ..., 101-3 aufgenommen werden. Die Arbeitsschritte für die Ermittlung charakteristischer, für die Kalibrierung geeigneter Kalibrierungsmerkmale und deren Extraktion aus den Datenströmen basieren auf einem unüberwachten Lernen (Unsupervised Learning). Beim Kalibrieren der Sensoren 101-1, ..., 101-3 kann beispielsweise ein Versatz, eine Verschiebung oder eine Drehung der jeweils von den Sensoren 101-1, ..., 101-3 erfassten Koordinatensysteme oder ein Zeitversatz zwischen den Sensoren 101-1, ..., 101-3 ausgeglichen werden.

Das unüberwachte Lernen ist ein maschinelles Lernen ohne im Voraus bekannte Zielwerte sowie ohne Belohnung durch die Umwelt. Stattdessen ist eine konsistente Kalibrierung die Belohnung, die angestrebt wird, aber nicht aus der Umwelt erhalten wird. Die lernende Maschine versucht, in den Datenströmen Muster als Kalibrierungsmerkmale zu erkennen, die vom strukturlosen Rauschen abweichen. Das maschinelle Lernen dient zur künstlichen Generierung von Wissen aus Erfahrung. Das System lernt aus Beispielen und kann diese nach Beendigung der Lernphase verallgemeinern. Das heißt, es werden nicht lediglich Beispiele auswendig gelernt, sondern es erkennt Muster und Gesetzmäßigkeiten in den Datenströmen. So kann das System auch unbekannte Kalibrierungsmerkmale beurteilen (Lerntransfer).

Ein künstliches neuronales Netz orientiert sich an der Ähnlichkeit der Daten und adaptiert die Gewichte des Netzes entsprechend. Dadurch können automatisch verschiedene Kalibrierungsmerkmale aus jeder Umgebung gelernt werden.

Eine weitere beispielhafte Realisierung beruht dabei auf dem Prinzip des Sparse Coding, z.B. realisiert durch Autoencoder. Das Sparse Coding beruht darauf, die wesentlichen Kalibrierungsmerkmale einer gegebenen Menge von Sensordaten durch eine minimale Anzahl beschreibender Elemente zu erfassen. Die Gesamtheit der in Frage kommenden beschreibenden Elemente wird dabei durch die Vorverarbeitung einer sehr großen, viele einzelne Fälle umfassenden Datenmenge ermittelt.

Der Autoencoder ist ein künstliches neuronales Netz, das dazu genutzt wird, effiziente Codierungen zu lernen. Das Ziel des Autoencoders ist es, eine komprimierte Repräsentation (Encoding) der Kalibrierungsmerkmale für die Datenströme zu lernen und die wesentlichen Kalibrierungsmerkmale zu extrahieren.

Der Autoencoder benutzt drei oder mehr Schichten, nämlich eine Eingabeschicht, bei der die Neuronen beispielsweise die Umgebung abbilden, einer Anzahl signifikant kleinerer Schichten, die das Encoding bilden und eine Ausgabeschicht, in der jedes Neuron die gleiche Bedeutung hat, wie das entsprechende Neuron in der Eingabeschicht.

Die für die Kalibrierung geeigneten Kalibrierungsmerkmale stammen von Objekten, die von den Sensoren 101-1, ..., 101-3 sicher erfasst werden und über die Zeit möglichst konstant bleiben. Die entsprechenden Daten zu diesen

Kalibrierungsmerkmalen zeichnen sich dadurch aus, dass sie über viele Messungen hinweg mit geringen Abweichungen immer wieder auftreten. Das bedeutet, dass die Kalibrierungsmerkmale in den Datenströmen mit relativ wenigen beschreibenden Elementen erfasst werden können, die somit besonders häufig auftreten.

Diese Elemente werden von den Sparse Coding Algorithmen erkannt und damit die Auswahl der Kalibrierungsmerkmale automatisiert. Das Zeitverhalten lässt sich auf ähnliche Weise ermitteln. Dazu werden die Daten mehrerer Frames zu einem größeren Datensatz zusammengefasst.

Dadurch lassen sich die für die Kalibrierung geeigneten Kalibrierungsmerkmale automatisch ermitteln. Die technischen Vorteile des Verfahrens liegen in einer größeren Flexibilität und einem geringeren Aufwand, sowohl in der Durchführung der Kalibrierung als auch in der Vorbereitung der Kalibrierung für jeweils verschiedene Systeme.

Das Sensorsystem 100 kann automatisch in einer beliebigen Umgebung kalibriert werden, sofern in dieser Umgebung Kalibrierungsmerkmale vorhanden sind. Die Kalibrierungsmerkmale werden von dem Sensorsystem 100 automatisch erkannt, so dass das Sensorsystem anhand der automatisch ausgewählten Kalibrierungsmerkmale dementsprechend kalibriert werden kann.

Besonders vorteilhaft ist es, die typischen Kalibrierungsparameter, wie beispielsweise eine relative Position und Orientierung, Latenzzeiten oder Abbildungseigenschaften, in die verwendeten Netzarchitekturen einzubauen. Beispiele für Netzarchitekturen sind grafische Modelle (Graphical Models) oder neuronale Netze. Dafür können geeignete Templates vorab entworfen und fallweise parametriert werden.

Das Verfahren kann durch ein digitales Computerprogramm mit Programmabschnitten zum Durchführen der Verfahrensschritte implementiert sein, wenn das Computerprogramm auf einem Computer ausgeführt wird. Der Computer umfasst dazu einen Datenspeicher zum Speichern des Computerprogramms und einen Prozessor zum Abarbeiten des Computerprogramms. Das Computerprogramm kann wiederrum auf einem externen Datenspeicher gespeichert sein, von dem das Computerprogramm in den internen Datenspeicher des Computers geladen werden kann. Der externe Datenspeicher ist beispielsweise eine CD-ROM, ein USB-Flash-Speicher oder ein Speicherlaufwerk im Internet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum Kalibrieren eines Sensorsystems (100), bei dem:
- ein erster Datenstrom mittels eines ersten Sensors (101-1) erfasst wird (S101);
- ein Kalibrierungsmerkmal (103) aus dem ersten Datenstrom extrahiert wird (S102);
- ein zweiter Datenstrom mittels eines zweiten Sensors (101-2) erfasst wird (S103);
- das extrahierte Kalibrierungsmerkmal (103) in dem zweiten Datenstrom identifiziert wird (S104),
**dadurch gekennzeichnet, dass**
- das Extrahieren des Kalibrierungsmerkmals (103) und das Identifizieren des extrahierten Kalibrierungsmerkmals (103) auf Basis eines neuronalen Netzes durchgeführt wird; und
- der erste Sensor (101-1) in Bezug auf den zweiten Sensor (101-2) auf Basis des extrahierten Kalibrierungsmerkmals und des identifizierten Kalibrierungsmerkmals kalibriert wird (S105).

2. Verfahren nach Anspruch 1, wobei der erste und/oder zweite Sensor (101-1, 101-2) ein Bildsensor zum optischen Erfassen der Umgebung des Sensorsystems (100) ist.

3. Verfahren nach Anspruch 1, wobei der erste und/oder zweite Sensor (101-1, 101-2) ein Laserscanner ist, der einen Laserstrahl ausstrahlt, der die Umgebung zeilen- oder rasterartig überstreicht.

4. Verfahren nach Anspruch 1, wobei der erste und/oder zweite Sensor (101-1, 101-2) ein Radarsensor ist, der ein Radarsignal aussendet, das von der Umgebung des Sensorsystems (100) an den Sensor (101-2) zurückreflektiert wird.

5. Verfahren nach einem der vorangehenden Ansprüche, wobei das Extrahieren oder Identifizieren des Kalibrierungsmerkmals (103) auf Basis eines maschinellen Lernens durchgeführt wird, bei dem Muster in den Datenströmen als Kalibrierungsmerkmale erkannt werden.

6. Verfahren nach einem der vorangehenden Ansprüche, wobei das Extrahieren oder Identifizieren eines Kalibrierungsmerkmals (103) auf Basis einer Anzahl von beschreibenden Elementen durchgeführt wird.

7. Sensorsystem (100), mit:
- einem ersten Sensor (101-1) zum Erfassen eines ersten Datenstroms;
- einem zweiten Sensor (101-2) zum Erfassen eines zweiten Datenstroms;
- einem Extraktionsmodul (105) zum Extrahieren eines Kalibrierungsmerkmals (103) aus dem ersten Datenstrom;
- einem Identifikationsmodul (107) zum Identifizieren des extrahierten Kalibrierungsmerkmals (103) in dem zweiten Datenstrom auf Basis eines neuronalen Netzes;
**dadurch gekennzeichnet, dass**
- das Extraktionsmodul (105) und das Identifikationsmodul (107) derart ausgebildet sind, dass das Extrahieren des Kalibrierungsmerkmals (103) und das Identifizieren des extrahierten Kalibrierungsmerkmal (103) auf Basis eines neuronalen Netzes durchgeführt wird; und
- ein Kalibrierungsmodul (109) zum Kalibrieren des ersten Sensors (101-1) in Bezug auf den zweiten Sensor (101-2) auf Basis des extrahierten Kalibrierungsmerkmals und des identifizierten Kalibrierungsmerkmals enthalten ist.

8. Computerprogramm mit Programmabschnitten zum Durchführen der Verfahrensschritte nach einem der Ansprüche 1 bis 6, wenn das Computerprogramm auf einem Computer ausgeführt wird.

9. Datenspeicher mit einem Computerprogramm nach Anspruch 8.

## Claims

1. Method for calibrating a sensor system (100), in which:
- a first data stream is captured (S101) by means of a first sensor (101-1);
- a calibration feature (103) is extracted (S102) from the first data stream;
- a second data stream is captured (S103) by means of a second sensor (101-2);
- the extracted calibration feature (103) is identified (S104) in the second data stream,
**characterized in that**
- the calibration feature (103) is extracted and the extracted calibration feature (103) is identified on the basis of a neural network; and
- the first sensor (101-1) is calibrated (S105) with respect to the second sensor (101-2) on the basis of the extracted calibration feature and the identified calibration feature.

2. Method according to Claim 1, wherein the first and/or second sensor (101-1, 101-2) is an image sensor for optically capturing the environment of the sensor system (100).

3. Method according to Claim 1, wherein the first and/or second sensor (101-1, 101-2) is a laser scanner which emits a laser beam which scans the environment in a row-like or gridlike manner.

4. Method according to Claim 1, wherein the first and/or second sensor (101-1, 101-2) is a radar sensor which emits a radar signal which is reflected back to the sensor (101-2) by the environment of the sensor system (100).

5. Method according to one of the preceding claims, wherein the calibration feature (103) is extracted or identified on the basis of machine learning, during which patterns in the data streams are recognized as calibration features.

6. Method according to one of the preceding claims, wherein a calibration feature (103) is extracted or identified on the basis of a number of descriptive elements.

7. Sensor system (100) having:
- a first sensor (101-1) for capturing a first data stream;
- a second sensor (101-2) for capturing a second data stream;
- an extraction module (105) for extracting a calibration feature (103) from the first data stream;
- an identification module (107) for identifying the extracted calibration feature (103) in the second data stream on the basis of a neural network;
**characterized in that**
- the extraction module (105) and the identification module (107) are designed such that the calibration feature (103) is extracted and the extracted calibration feature (103) is identified on the basis of a neural network; and
- a calibration module (109) for calibrating the first sensor (101-1) with respect to the second sensor (101-2) on the basis of the extracted calibration feature and the identified calibration feature.

8. Computer program having program sections for carrying out the method steps according to one of Claims 1 to 6 when the computer program is executed on a computer.

9. Data memory having computer program according to Claim 8.

## Revendications

1. Procédé d'étalonnage d'un système de capteur (100), dans lequel :
- un premier flux de données est détecté (S101) au moyen d'un premier capteur (101-1),
- un élément caractéristique d'étalonnage (103) est extrait (S102) à partir du premier flux de données,
- un deuxième flux de données est détecté (S103) au moyen d'un deuxième capteur (101-2),
- l'élément caractéristique d'étalonnage (103) extrait est identifié (S104) dans le deuxième flux de données,
**caractérisé en ce que**
- l'extraction de l'élément caractéristique d'étalonnage (103) et l'identification de l'élément caractéristique d'étalonnage (103) extrait sont exécutées sur la base d'un réseau neuronal, et
- le premier capteur (101-1) est étalonné (S105) en rapport avec le deuxième capteur (101-2) sur la base de l'élément caractéristique d'étalonnage extrait et de l'élément caractéristique d'étalonnage identifié.

2. Procédé selon la revendication 1, dans lequel le premier et/ou le deuxième capteur (101-1, 101-2) est un capteur d'image pour une détection optique des environs du système de capteur (100).

3. Procédé selon la revendication 1, dans lequel le premier et/ou le deuxième capteur (101-1, 101-2) est un scanner laser qui émet un rayon laser, qui balaye les environs en lignes ou à la manière d'une trame.

4. Procédé selon la revendication 1, dans lequel le premier et/ou le deuxième capteur (101-1, 101-2) est un capteur radar, qui émet un signal radar, qui est réfléchi en retour par les environs du système de capteur (100) sur le capteur (101-2).

5. Procédé selon l'une des revendications précédentes, dans lequel l'extraction ou l'identification de l'élément caractéristique d'étalonnage (103) est exécutée sur la base d'un apprentissage machine, dans lequel des modèles sont identifiés dans les flux de données en tant qu'éléments caractéristiques d'étalonnage.

6. Procédé selon l'une des revendications précédentes, dans lequel l'extraction ou l'identification d'un élément caractéristique d'étalonnage (103) est exécutée sur la base d'un certain nombre d'éléments descriptifs.

7. Système de capteur (100), comprenant :
- un premier capteur (101-1) pour détecter un premier flux de données,
- un deuxième capteur (101-2) pour détecter un deuxième flux de données,
- un module d'extraction (105) pour extraire un élément caractéristique d'étalonnage (103) à partir du premier flux de données,
- un module d'identification (107) pour identifier l'élément caractéristique d'étalonnage (103) extrait dans le deuxième flux de données sur la base d'un réseau neuronal,
**caractérisé en ce que**
- le module d'extraction (105) et le module d'identification (107) sont configurés de telle manière que l'extraction de l'élément caractéristique d'étalonnage (103) et l'identification de l'élément caractéristique d'étalonnage (103) extrait sont exécutées sur la base d'un réseau neuronal, et
- un module d'étalonnage (109) pour étalonner le premier capteur (101-1) en rapport avec le deuxième capteur (101-2) sur la base de l'élément caractéristique d'étalonnage extrait et de l'élément caractéristique d'étalonnage identifié est inclus.

8. Programme informatique comprenant des sections de programme pour exécuter les étapes du procédé selon l'une des revendications 1 à 6, lorsque le programme informatique est exécuté sur un ordinateur.

9. Mémoire de données comprenant un programme informatique selon la revendication 8.
